# EUROPEAN PATENT APPLICATION

(11) **EP 4 206 479 A1**
(43) Date of publication of application: **05.07.2023**
(21) Application number: 22866179.9
(22) Date of filing: 08.06.2022
(51) Int. Cl.: F15B 15/14, F16H 61/30, F15B 15/22

(54) **TRACTOR SYNCHRONIZER SHIFTING OIL CYLINDER, SHIFTING METHOD, AND TRACTOR**

(30) Priority: 07.09.2021 CN 202111045163
(71) Applicant: Weichai Lovol Intelligent Agricultural Technology Co., Ltd., Weifang, Shandong 261206 (CN)
(72) Inventor: SHENTU, Junyang, Weifang, Shandong 261206 (CN); FU, Yanhong, Weifang, Shandong 261206 (CN); LI, Defang, Weifang, Shandong 261206 (CN); LI, Zhengyu, Weifang, Shandong 261206 (CN); CAI, Yanbin, Weifang, Shandong 261206 (CN); ZHAO, Wenke, Weifang, Shandong 261206 (CN); WANG, Huan, Weifang, Shandong 261206 (CN); MU, Song, Weifang, Shandong 261206 (CN); FEI, Hongxiang, Weifang, Shandong 261206 (CN); CAI, Erpeng, Weifang, Shandong 261206 (CN); HE, Xiaofei, Weifang, Shandong 261206 (CN); LI, Chuang, Weifang, Shandong 261206 (CN)
(74) Representative: HGF
(86) International application number: PCT/CN2022/097511
(87) International publication number: WO 2023/035703

(57) **Abstract**

Provided are a shifting oil cylinder for a tractor synchronizer, a shifting method, and a tractor. The shifting oil cylinder includes a piston rod, a cylinder body, and a positioning piston. The positioning piston is axially movably disposed in the cylinder body. The piston rod is hermetically arranged through the cylinder body and is axially movable relative to the cylinder body. The positioning piston has a cylindrical structure. The piston rod is sleeved in the positioning piston. A piston is disposed in the middle of the piston rod. A peripheral sidewall of the piston is hermetically connected to an inner sidewall of the positioning piston and is axially movable relative to the positioning piston. The piston divides a cavity of the cylinder body into a first cavity and a second cavity. A first oil port and a second oil port are opened on the cylinder body. The first oil port communicates with the first cavity, and the second oil port communicates with the second cavity.

## Description

This application claims priority to Chinese Patent Application No. 202111045163.8 filed on Sep.7, 2021, the disclosure of which is incorporated herein by reference in its entirety.

### TECHNICAL FIELD

The present application relates to tractor-related technical fields, for example, a shifting oil cylinder for a tractor synchronizer, a shifting method, and a tractor.

### BACKGROUND

In the related art, shifting methods commonly used in the tractor transmission box include coupling sleeve shifting, synchronizer shifting, and power shifting. Among the three shifting methods, the coupling sleeve shifting has the advantages of a simple structure and low manufacturing costs, but the shifting impact is relatively large, resulting in a short service life of the transmission box. To make up for the deficiencies in the coupling sleeve shifting technology, a synchronizer shifting technology has been developed. However, synchronizer shifting requires manual manipulation, is poor in maneuverability and fails to realize automatic shifting control.

The related patent discloses a power-shifting hydraulic oil cylinder for a tractor, which discloses that the oil cylinder realizes the positioning of a middle position of a first piston through a second piston, so as to ensure that the cylinder can be accurately controlled in the left position, the middle position and the right position. This patent has the following disadvantages. (1) An independent middle-position control oil port is provided. The control method is complicated. (2) The guide length of the second piston is too short, which is prone to clamping stagnation and leads to a high failure rate. (3) The sealing element of the first piston has relatively large frictional resistance, reducing the response speed of the oil cylinder. (4) No buffer device is provided when the piston moves to a limit position, so the impact force between the piston and the cylinder body is relatively large.

### SUMMARY

The present application provides a shifting oil cylinder for a tractor synchronizer, a shifting method, and a tractor. Technical problems that can be solved are aimed at the deficiencies of the existing art.

A shifting oil cylinder for a tractor synchronizer includes a piston rod, a cylinder body, and a positioning piston. The positioning piston is axially movably disposed in the cylinder body. The piston rod is hermetically arranged through the cylinder body and is axially movable relative to the cylinder body. The positioning piston has a cylindrical structure. The piston rod is sleeved in the positioning piston. A piston is disposed in the middle of the piston rod. A peripheral sidewall of the piston is hermetically connected to an inner sidewall of the positioning piston and is axially movable relative to the positioning piston. The piston divides a cavity of the cylinder body into a first cavity and a second cavity. A first oil port and a second oil port are opened on the cylinder body. The first oil port communicates with the first cavity, and the second oil port communicates with the second cavity.

A shifting method for a shifting oil cylinder for a tractor synchronizer described above includes the operations described below.

The piston rod is connected to a load.

Pressure oil is supplied through the first oil port and the second oil port simultaneously so that the positioning piston is positioned on a right side of the cylinder body and the piston on the piston rod is positioned on a left side of the positioning piston.

Pressure is released through the first oil port and pressure oil is supplied through the second oil port so that the positioning piston is moved leftward to a limit position on a left side of the cylinder body under an action of the pressure oil provided by the second oil port.

When pressure of the pressure oil provided by the second oil port reaches a rated operating pressure and is maintained for a first preset time, a driving gear and a driven gear of a synchronizer are synchronized so that the piston rod is moved to the limit position on the left side of the cylinder body to be shifted under the action of the pressure oil.

When shifting is completed, pressure is released through the first oil port and the second oil simultaneously.

Pressure oil is supplied through the first oil port and pressure is released through the second oil port so that the positioning piston is maintained at a limit position on the right side of the cylinder body under an action of the pressure oil provided by the first oil port.

When pressure of the pressure oil provided by the first oil port reaches a rated operating pressure and is maintained for a second preset time, the driving gear and the driven gear of the synchronizer are synchronized so that the piston rod is moved to the limit position on the right side of the cylinder body to be shifted under the action of the pressure oil.

When shifting is completed, pressure is released through the first oil port and the second oil port simultaneously.

A tractor includes a shifting oil cylinder for a tractor synchronizer described above.

### BRIEF DESCRIPTION OF DRAWINGS

FIG. 1 is a diagram illustrating the structure of a shifting oil cylinder in the middle position according to an embodiment of the present application.
FIG. 2 is a diagram illustrating the structure of a shifting oil cylinder in the left position according to an embodiment of the present application.
FIG. 3 is a diagram illustrating the structure of a shifting oil cylinder in the right position according to an embodiment of the present application.
FIG. 4 is a diagram illustrating the structure of the cylinder body of a shifting oil cylinder according to an embodiment of the present application.
FIG. 5 is a diagram illustrating the structure of the ends of the positioning piston according to an embodiment of the present application.
FIG. 6 is a sectional view taken along A-A of FIG. 5.
FIG. 7 is a diagram illustrating the structure of a piston rod according to an embodiment of the present application.
FIG. 8 is a flowchart of a shifting method for the shifting oil cylinder for a tractor synchronizer according to an embodiment of the present application.

In the drawings, the list of parts represented by each reference numeral is as follows:
- 1: piston rod
- 2: retaining ring A
- 3: left cylinder cover
- 4: sealing retaining ring A
- 5: O-shaped ring A
- 6: special-shaped sealing ring A
- 7: support ring A
- 8: retaining ring B
- 9: O-shaped ring B
- 10: sealing retaining ring B
- 11: retaining ring C
- 12: support ring B
- 13: special-shaped sealing ring B
- 14: right cylinder cover
- 15: cylinder body
- 16: positioning piston
- 17: special-shaped sealing ring C
- 18: support ring C
- 19: first oil port
- 20: second oil port
- 21: third oil port
- 22: first cavity
- 23: second cavity
- 24: piston
- 25: oil groove
- 26: pressure-equalizing groove
- 27: buffer groove
- 28: load connection groove
- 29: limit protrusion

### DETAILED DESCRIPTION

### Embodiment 1

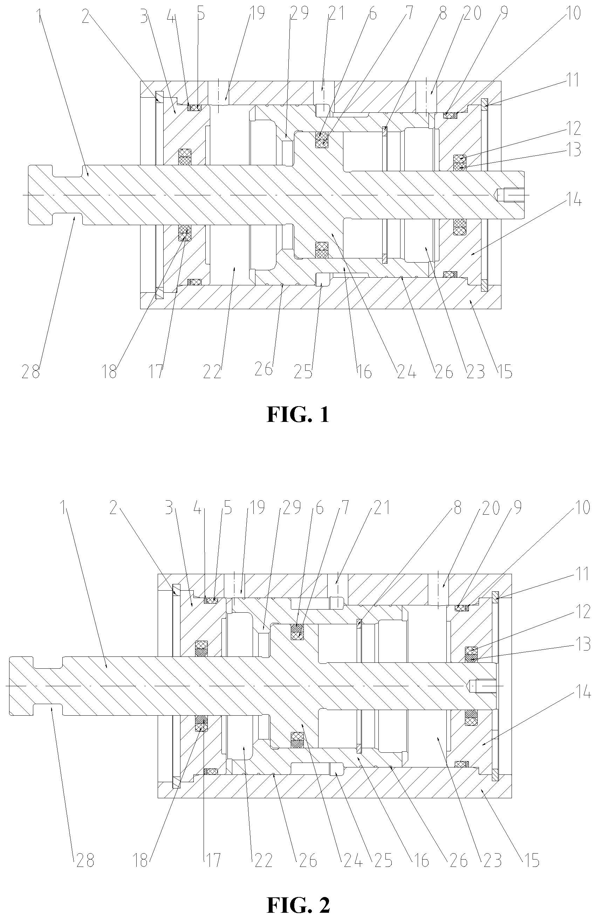

As shown in FIGS. 1 to 7, this embodiment provides a shifting oil cylinder for a tractor synchronizer, including a piston rod 1, a cylinder body 15, and a positioning piston 16. The positioning piston 16 is axially movably disposed in the cylinder body 15. The piston rod 1 is hermetically arranged through the cylinder body 15 and is axially movable relative to the cylinder body 15. The positioning piston 16 has a cylindrical structure. The piston rod 1 is sleeved through the positioning piston 16. A piston 24 is disposed in the middle of the piston rod 1. A peripheral sidewall of the piston 24 is hermetically connected to an inner sidewall of the positioning piston 16 and is axially movable relative to the positioning piston 16. The piston 24 divides a cavity of the cylinder body 15 into a first cavity 22 and a second cavity 23. A first oil port 19 and a second oil port 20 are opened on the cylinder body 15. The first oil port 19 communicates with the first cavity 22, and the second oil port 20 communicates with the second cavity 23. The first oil port 19 and the second oil port 20 may be connected directly by a flange, a threaded oil port, or other forms. The piston rod 1 adopts double-extension rods, and a load connection groove 28 connected to a load may be provided at one end of the left side of the piston rod 1.

As shown in FIGS. 1 to 5, the inner sidewall of the positioning piston 16 is provided with a limit protrusion 29. The left side of the piston 24 of the piston rod 1 abuts against the limit protrusion 29. The limit protrusion 29 on the positioning piston 16 is configured to limit the left-side movement of the piston rod 1. The inner sidewall of the positioning piston 16 is also provided with a retaining ring B 8. The right side of the piston 24 of the piston rod 1 abuts against the retaining ring B 8. The retaining ring B 8 on the positioning piston 16 is configured to limit the right-side movement of the piston rod 1.

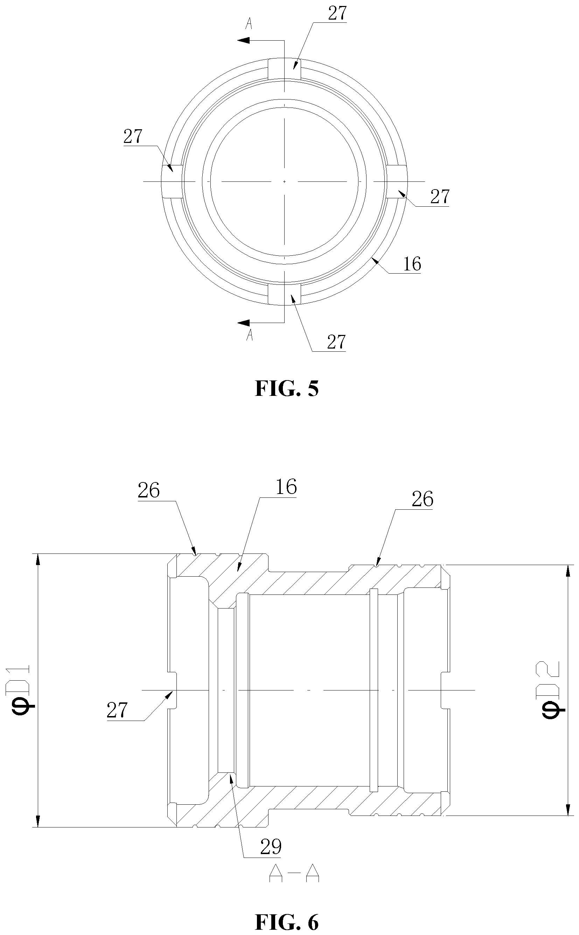

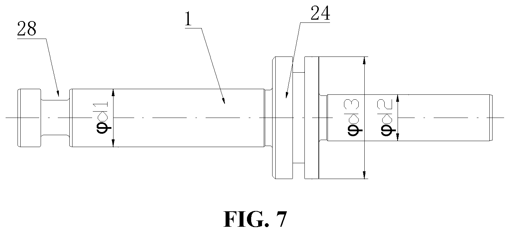

In an embodiment as shown in FIG. 6 and FIG. 7, an outer diameter of a portion of the positioning piston 16 located in the first cavity 22 is D1, an outer diameter of a portion of the positioning piston 16 located in the second cavity 23 is D2, a diameter of a portion of the piston rod 1 located in the first cavity 22 is d1, and a diameter of a portion of the piston rod 1 located in the second cavity 23 is d2. The relationship is as follows: D1 > D2, d1 > d2, D1² - d1² > K(D2² - d2²), 1.5 > K > 1.1. In the formula, K is an area difference coefficient. The larger the K is, the larger the area difference between the positioning piston 16 and the two sides of the piston rod 1 is. When the shifting control pressure is high, K takes a small value; otherwise, K takes a large value. Since the action areas of the two cavities of the cylinder body are different, the accurate control of the left position, the middle position, and the right position of the shifting oil cylinder can be realized by controlling the oil pressure of the two cavities. The piston rod can be automatically positioned in the middle position of the cylinder body when oil is supplied through the first oil port and the second oil port simultaneously. Left-side and right-side shifting can be realized when oil is supplied through one oil port and released through another oil port.

In an embodiment as shown in FIGS. 1 to 4, to adapt to the structure of the positioning piston 16, a step is disposed on the inner sidewall of the cylinder body 15, forming a first cavity 22 and a second cavity 23. The inner diameter of the first cavity 22 is greater than that of the second cavity 23. The size of the first cavity 22 is adapted to the large outer diameter section of the positioning piston 16, and the size of the second cavity 23 is adapted to the small outer diameter section of the positioning piston 16.

In an embodiment as shown in FIGS. 1 to 4, the cylinder body 15 is also provided with a third oil port 21. A peripheral sidewall of the positioning piston 16 is provided with an annular oil groove 25 which communicates with the third oil port 21. The third oil port 21 may be disposed at the step on the inner sidewall of the cylinder body 15. The third oil port is opened so that the third oil port is directly connected to the oil tank, which facilitates the flow of pressure oil in the cylinder body and makes the shifting operation faster and more reliable.

As shown in FIGS. 1 to 3 and FIG. 6, the positioning piston 16 is in a clearance fit with an inner sidewall of the cylinder body 15. An annular pressure-equalizing groove 26 is disposed on a peripheral sidewall of the positioning piston16. A cross section of the pressure-equalizing groove is semicircular, rectangular, or triangular. The pressure-equalizing grooves 26, taking the axis of the piston rod 1 as the central axis, are disposed on the outer sidewall of the positioning piston 16. Multiple pressure-equalizing grooves 26 are arranged at intervals. In an embodiment, multiple pressure-equalizing grooves 26 are arranged at intervals on the positioning piston 16 on both sides of the oil groove 25. After being supplied through two oil ports, pressure oil may be leaked between the positioning piston and the inner sidewall of the cylinder body through the pressure-equalizing grooves, forming an oil film between the inner sidewall of the cylinder body and the positioning piston. In this manner, the frictional resistance during the moving process of the positioning piston 16 is reduced, the response speed of the positioning piston is improved, and the hydraulic clamping force is reduced, thereby enhancing the shifting performance of the oil cylinder.

In an embodiment, the cross section of the pressure-equalizing groove 26 may adopt a circular arc structure, a square structure, a triangle structure, or a trapezoid structure. Since the positioning piston 16 is in a clearance fit with the cylinder body 15, when the piston rod 1 is in the middle position, both the first oil port 19 and the second oil port 20 can feed oil to the third oil port 21, forming an oil form in a gap between the positioning piston 16 and the cylinder body 15. Since machining errors of each component subject the positioning piston 16 to a certain eccentric force, the pressure-equalizing groove 26 enables the force on the positioning piston 16 to be more uniform and makes the shifting process faster and more reliable.

As shown in FIG. 5 and FIG. 6, buffer grooves 27 are separately disposed on end surfaces of both ends of the positioning piston 16 provided by this embodiment. Buffer grooves are separately disposed on end surfaces of both ends of the positioning piston so that when the positioning piston 16 starts to move and pressure oil enters at least one of the first cavity 22 or the second cavity 23 through the buffer groove 27, the oil passage area increases slowly; when the positioning piston 16 moves to a limit position close to two ends of the cylinder body 15, the buffer groove 27 ensures that the area of the oil drain channel decreases slowly, thereby reducing large fluctuation of the oil pressure and the impact force of the positioning piston on the cylinder body. In this manner, the working reliability and service life of the oil cylinder are improved.

In an embodiment as shown in FIG. 5, the number of buffer grooves 27 on end surfaces of both ends of the positioning piston 16 can be one or more, for example, 1, 2, 3, and 4. As shown in FIG. 5, four buffer grooves 27 are disposed on the end surface of the positioning piston 16.

As shown in FIG. 5 and FIG. 6, each of the buffer grooves 27 in this embodiment is radially arranged through an inner and outer sidewall of the positioning piston 16. The buffer groove is radially arranged through the inner and outer sidewall of the positioning piston so that pressure oil can enter the first cavity 22 or the second cavity 23 conveniently. In this manner, the instantaneous change of the oil passage area and the pressure fluctuation amplitude are reduced.

In this embodiment, the buffer groove 27 is trapezoidal, rectangular, or triangular. The buffer groove is configured so that the channel for the pressure oil or the oil drain circulation can be gradually opened or closed. In this manner, when the positioning piston 16 starts to move or moves to a place close to a limit position, the instantaneous change is not too big.

As shown in FIGS. 1 to 4, the cylinder body 15 in this embodiment includes a main body and end covers. The main body has a cylindrical structure with both ends open. The first oil port 19 and the second oil port 20 are separately opened on the main body. Two open ends of the main body are separately provided with the end covers and are hermetically connected to the end covers. End covers are limited at both ends of the cylinder body through retaining rings. This configuration features easy assembly, a compact structure, and a small volume.

Specifically, as shown in FIG. 1 to 3, two ends of the main body of the cylinder body 15 are respectively provided with a left cylinder cover 3 and a right cylinder cover 14. The left cylinder cover 3 is limited inside the left end of the cylinder body 15 by a retaining ring A 2. The right cylinder cover 14 is limited inside the right end of the cylinder body 15 by a retaining ring C 11. A sealing retaining ring A 4 and an O-shaped ring A 5 are disposed between the left cylinder cover 3 and the inner sidewall of the cylinder body 15 to hermetically connect the left cylinder cover 3 and the cylinder body 15. A sealing retaining O-shaped ring B 9 and a sealing retaining ring B 10 are disposed between the right cylinder cover 14 and the inner sidewall of the cylinder body 15 to hermetically connect the right cylinder cover 14 and the cylinder body 15. The left cylinder cover 3 and the piston rod 1 are hermetically connected by a special-shaped sealing ring C 17 and a support ring C 18, and the special-shaped sealing ring C 17 is closely matched with the piston rod 1 under the supporting effect of the support ring C 18. The right cylinder cover 14 and the piston rod 1 are hermetically connected by a special-shaped sealing ring B 13 and a support ring B 12, and the special-shaped sealing ring B 13 is closely matched with the piston rod 1 under the supporting effect of the support ring B 12. The piston 24 of the piston rod 1 and the inner sidewall of the positioning piston 16 are hermetically connected by a special-shaped sealing ring A 6 and a support ring A 7, and the special-shaped sealing ring A 6 is closely matched with the positioning piston 16 under the supporting effect of the support ring A 7. The special-shaped sealing rings B 13, C 17, and A 6 adopt special sealing materials with low frictional resistance. The special shape reduces the contact area between the sealing ring and the piston rod.

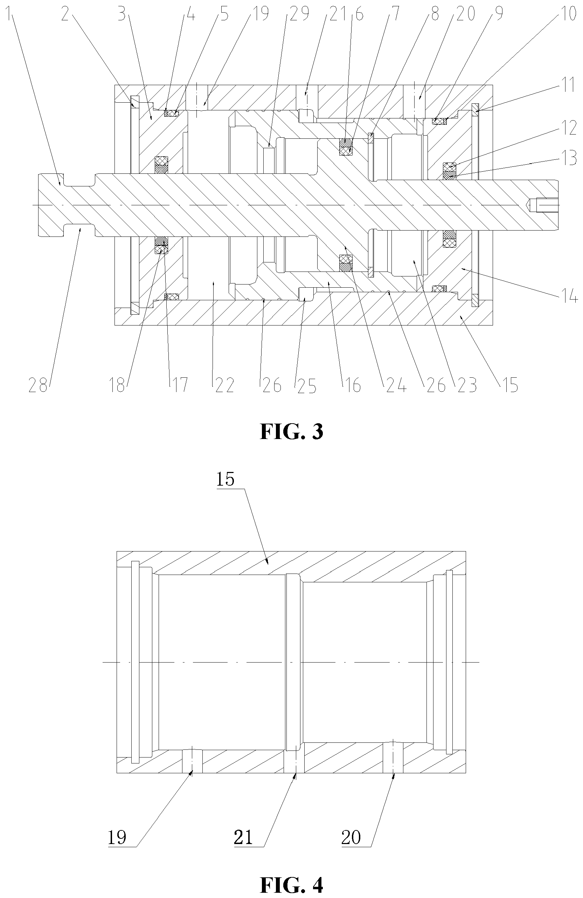

The working process of the shifting oil cylinder in this embodiment is shown in FIG. 1. When the shifting oil cylinder is in a middle position, pressure oil is simultaneously supplied through the first oil port 19 and the second oil port 20. Since the structural dimensions of the positioning piston 16 and the piston rod 1 satisfy the inequality: D1² - d1² > K (D2² - d2²), the thrust on the left side of the positioning piston 16 is greater than the thrust on the right side, ensuring that the positioning piston 16 is positioned on the right side of the cylinder body 15; the thrust on the left side of the piston rod 1 is less than the thrust on the right side, ensuring that the piston rod 1 is positioned in the middle of the cylinder body due to the thrust on the left side of positioning piston 16. In addition, a small part of pressure oil leaks from a clearance between the positioning piston 16 and the cylinder body 15, thereby reducing the frictional resistance of the positioning piston 16 and greatly improving the response speed of the positioning piston 16. FIG. 2 shows the oil cylinder in the left position, where pressure oil is supplied through the second oil port 20 and released through the first oil port 21 directly. Under the action of pressure, the positioning piston 16 instantly moves leftward to a limit position. Since the piston rod 1 cannot move immediately due to the load, when the pressure reaches a rated operating pressure and is maintained for a preset time, a driving gear and a driven gear of a synchronizer are synchronized so that the piston rod is moved to the limit position on the left side under the pressure on the right side. After shifting is completed, pressure is released through the first oil port 19 and the second oil port 20 simultaneously. When it is necessary to control the cylinder to the middle position, pressure oil is supplied through the first oil port 19 and the second oil port 20 simultaneously, and the middle-position control method is repeated. FIG. 3 shows the oil cylinder in the right position, where pressure oil is supplied through the first oil port 19 and released through the second oil port 21 directly. Under the action of pressure, the positioning piston 16 is maintained at a limit position on the right side. Since the pressure on the left side of the piston rod 1 reaches a rated operating pressure and is maintained for a preset time, the driving gear and the driven gear of the synchronizer are synchronized so that the piston rod is moved to the limit position on the right side under the pressure on the left side. When shifting is completed, pressure is released through the first oil port and the second oil port simultaneously. When it is necessary to control the cylinder to the middle position, pressure oil is supplied through the first oil port 19 and the second oil port 20 simultaneously, and the middle-position control method is repeated.

The shifting oil cylinder of this embodiment has a small volume and a compact structure. The control method is simple with fast response speed, high reliability, and low costs. The piston rod 1 of the shifting oil cylinder is sleeved in the positioning piston 16 and is matched with the inner cavity of the positioning piston 16 by a piston 24 disposed on the piston rod 1. In this manner, shifting control is realized by using two cavities of the cylinder body to match two oil ports, and the control of three shifting positions is realized by using two oil ports.

### Embodiment 2

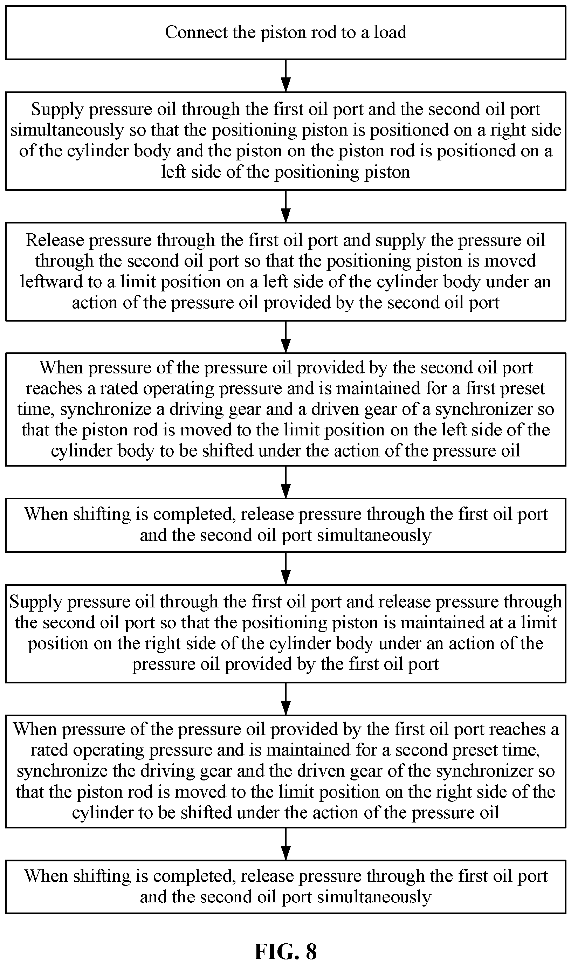

A shifting method for a shifting oil cylinder for a tractor synchronizer in this embodiment described above is shown in FIG. 8, including operations described below.

The piston rod 1 is connected to a load. Specifically, a load connection groove 28 on the piston rod 1 is used to connect to the load. The load is a pickle fork.

Pressure oil is supplied through the first oil port 19 and the second oil port 20 simultaneously so that the positioning piston 16 is positioned on a right side of the cylinder body 15 and the piston 24 on the piston rod 1 is positioned on a left side of the positioning piston 16.

Pressure is released through the first oil port 19 and pressure oil is supplied through the second oil port 20 so that the positioning piston 16 is moved leftward to a limit position on a left side of the cylinder body 15 under an action of the pressure oil provided by the second oil port 20.

Since the piston rod 1 is delayed by the load, when pressure of the pressure oil provided by the second oil port 20 reaches a rated operating pressure and is maintained for a first preset time, a driving gear and a driven gear of a synchronizer are synchronized so that the piston rod 1 is moved to the limit position on the left side of the cylinder body 15 to be shifted under the action of the pressure oil.

When shifting is completed, pressure is released through the first oil port 19 and the second oil port 20 simultaneously.

Pressure oil is supplied through the first oil port 19 and pressure is released through the second oil port 20 so that the positioning piston 16 is maintained at a limit position on the right side of the cylinder body 15 under an action of the pressure oil provided by the first oil port 19.

When pressure of the pressure oil provided by the first oil port 19 reaches a rated operating pressure and is maintained for a second preset time, the driving gear and the driven gear of the synchronizer are synchronized so that the piston rod 1 is moved to the limit position on the right side of the cylinder body 15 to be shifted under the action of the pressure oil.

When shifting is completed, pressure is released through the first oil port 19 and the second oil port 20 simultaneously.

In the shifting method of this embodiment, shifting control of the shifting oil cylinder is realized by using two cavities to match two oil ports.

### Embodiment 3

A tractor in this embodiment includes a shifting oil cylinder for a tractor synchronizer described above. The tractor adopting the preceding shifting oil cylinder has a stable and quick shifting process and a low failure rate.

In the description of the present application, it is to be understood that the orientation or position relationships indicated by terms "center", "longitudinal", "lateral", "length", "width", "thickness", "above", "below", "front", "back"," "left", "right", "vertical", "horizontal", "top", "bottom", "inside", "outside", "clockwise", "counterclockwise", "axial", "radial", "circumferential", etc. are based on the orientation or position relationships shown in the drawings, merely for facilitating description of the present application and simplifying description, and do not indicate or imply that the apparatus or element referred to has a specific orientation and is constructed and operated in a specific orientation, and thus it is not to be construed as limiting the present application.

Moreover, terms such as "first" and "second" are used only for the purpose of description and are not to be construed as indicating or implying relative importance or implicitly indicating the number of technical features indicated. Thus, a feature defined as a "first" feature or a "second" feature may expressly or implicitly include at least one of such features. As described herein, the term "a plurality of" is defined as at least two, for example, two, three, or the like, unless otherwise expressly limited.

In the present disclosure, unless otherwise expressly specified and limited, terms "mounted", "connected to each other", "connected", "fixed" and the like are to be construed in a broad sense, for example, as permanently connected, detachably connected, or integrated; mechanically connected or electrically connected; directly connected to each other or indirectly connected to each other via an intermediary; or internally connected between two components or interaction relations between two components. For those of ordinary skill in the art, specific meanings of the preceding terms in the present application may be construed according to specific circumstances.

In the present application, unless otherwise expressly specified and limited, when a first feature is described as "above" or "below" a second feature, the first feature and the second feature may be in direct contact or be in indirect contact via an intermediary. Moreover, when the first feature is "on", "above", or "over" the second feature, the first feature is right on, above, or over the second feature, or the first feature is obliquely on, above, or over the second feature, or the first feature is simply at a higher level than the second feature. When the first feature is "under", "below", or "underneath" the second feature, the first feature is right under, below, or underneath the second feature, or the first feature is obliquely under, below, or underneath the second feature, or the first feature is simply at a lower level than the second feature.

In the description of the specification, the description of reference terms "an embodiment", "some embodiments", "example", "specific example", or "some examples" and the like means a specific characteristic, a structure, a material, or a feature described in connection with the embodiment or the example are included in at least one embodiment or example of the present application. In the specification, the illustrative description of the preceding terms does not necessarily refer to the same embodiment or example. Moreover, the described specific features, structures, materials, or characteristics may be combined in an appropriate manner in any one or more embodiments or examples. In addition, the different embodiments or examples described in this specification and the features of the different embodiments or examples may be combined by those skilled in the art without contradicting each other.

## Claims

1. A shifting oil cylinder for a tractor synchronizer, comprising:
a cylinder body;
a piston rod, wherein a positioning piston is axially movably disposed in the cylinder body, and the piston rod is hermetically arranged through the cylinder body and is axially movable relative to the cylinder body;
the positioning piston, wherein the positioning piston has a cylindrical structure, the piston rod is sleeved in the positioning piston, a piston is disposed in the middle of the piston rod, a peripheral sidewall of the piston is hermetically connected to an inner sidewall of the positioning piston and is axially movable relative to the positioning piston, and the piston divides a cavity of the cylinder body into a first cavity and a second cavity, wherein a first oil port and a second oil port are opened on the cylinder body, the first oil port communicates with the first cavity, and the second oil port communicates with the second cavity.

2. The shifting oil cylinder for the tractor synchronizer according to claim 1, wherein an outer diameter of a portion of the positioning piston located in the first cavity is D1, an outer diameter of a portion of the positioning piston located in the second cavity is D2, a diameter of a portion of the piston rod located in the first cavity is d1, and a diameter of a portion of the piston rod located in the second cavity is d2, wherein D1 > D2, d1 > d2, D1² - d1² > K(D2² - d2²), 1.5 > K > 1.1.

3. The shifting oil cylinder for the tractor synchronizer according to claim 1, wherein the cylinder body is further provided with a third oil port, and a peripheral sidewall of the positioning piston is provided with an annular oil groove which communicates with the third oil port.

4. The shifting oil cylinder for the tractor synchronizer according to claim 1, wherein the positioning piston is in a clearance fit with an inner sidewall of the cylinder body, an annular pressure-equalizing groove is disposed on a peripheral sidewall of the positioning piston, and a cross section of the pressure-equalizing groove is semicircular, rectangular or triangular.

5. The shifting oil cylinder for the tractor synchronizer according to claim 1, wherein buffer grooves are separately disposed on end surfaces of both ends of the positioning piston.

6. The shifting oil cylinder for the tractor synchronizer according to claim 5, wherein each of the buffer grooves is radially arranged through an inner sidewall and an outer sidewall of the positioning piston.

7. The shifting oil cylinder for the tractor synchronizer according to claim 5, wherein each of the buffer grooves is trapezoidal, rectangular, or triangular.

8. The shifting oil cylinder for the tractor synchronizer according to claim 1, wherein the cylinder body comprises a main body and end covers, wherein the main body has a cylindrical structure with both ends open, the first oil port and the second oil port are opened on the main body, two open ends of the main body are respectively provided with the end covers and are respectively hermetically connected to the end covers, and the end covers are limited at both ends of the cylinder body by retaining rings.

9. A shifting method, for the shifting oil cylinder for the tractor synchronizer according to any one of claims 1 to 8, comprising:
connecting the piston rod to a load;
supplying pressure oil through the first oil port and the second oil port simultaneously so that the positioning piston is positioned on a right side of the cylinder body and a piston on the piston rod is positioned on a left side of the positioning piston;
releasing pressure through the first oil port and supplying pressure oil through the second oil port so that the positioning piston is moved leftward to a limit position on a left side of the cylinder body under an action of pressure oil provided by the second oil port;
when pressure of pressure oil provided by the second oil port reaches a rated operating pressure and is maintained for a first preset time, synchronizing a driving gear and a driven gear of a synchronizer so that the piston rod is moved to the limit position on the left side of the cylinder body to be shifted under an action of pressure oil;
when shifting is completed, releasing pressure through the first oil port and the second oil port simultaneously ;
supplying pressure oil through the first oil port and releasing pressure through the second oil port so that the positioning piston is maintained at a limit position on the right side of the cylinder body under an action of pressure oil provided by the first oil port;
when pressure of pressure oil provided by the first oil port reaches a rated operating pressure and is maintained for a second preset time, synchronizing the driving gear and the driven gear of the synchronizer so that the piston rod is moved to the limit position on the right side of the cylinder body to be shifted under the action of pressure oil; and
when shifting is completed, releasing pressure through the first oil port and the second oil port simultaneously.

10. A tractor, comprising the shifting oil cylinder for the tractor synchronizer according to any one of claims 1 to 8.
